# EUROPEAN PATENT SPECIFICATION

(11) **EP 4 637 440 B1**
(45) Date of publication and mention of the grant of the patent: **23.09.2026**
(21) Application number: 22844018.6
(22) Date of filing: 23.12.2022
(51) Int. Cl.: A24F 40/46, A24F 40/40

(54) **HEATER ASSEMBLY WITH MICROPOROUS AEROGEL INSULATION**
HEIZUNGSANORDNUNG MIT MIKROPORÖSER AEROGELISOLIERUNG
ENSEMBLE DISPOSITIF DE CHAUFFAGE À ISOLATION PAR AÉROGEL MICROPOREUX

(43) Date of publication of application: 29.10.2025
(73) Proprietor: Philip Morris Products S.A., 2000 Neuchâtel (CH)
(72) Inventor: BESSANT, Michel, 2000 Neuchatel (CH); YIM, Jun Wei, 2000 Neuchatel (CH); LOPEZ, Serge, 2000 Neuchatel (CH); LIU, Liu, Guangdong 516006 (CN); LIU, Jinfeng, Guangdong 516006 (CN); WANG, Yuxiong, Guangdong 516006 (CN)
(74) Representative: Abitz & Partner
(86) International application number: PCT/CN2022/141450
(87) International publication number: WO 2024/130703

(56) References cited:
- WO-A1-2021/208883
- WO-A1-2022/090164
- WO-A1-2022/228154
- US-A1- 2015 184 588
- US-B2- 10 729 176

## Description

The present disclosure relates to a heater assembly for an aerosol-generating device. The present disclosure further relates to an aerosol-generating device. The present disclosure further relates to an aerosol-generating system comprising an aerosol-generating device and an aerosol-forming substrate.

It is known to provide an aerosol-generating device for generating an inhalable vapor. Such devices may heat an aerosol-forming substrate contained in an aerosol-generating article without burning the aerosol-forming substrate. The aerosol-generating article may have a rod shape for insertion of the aerosol-generating article into a heating chamber of the aerosol-generating device. A heating element is typically arranged in or around the heating chamber for heating the aerosol-forming substrate once the aerosol-generating article is inserted into the heating chamber of the aerosol-generating device.

Heat produced by the heating element may inadvertently be dissipated away from the heating chamber. Heat may be dissipated to the environment or to other components of the aerosol-generating system. Heat may inadvertently be dissipated away from the heating chamber via free air convection. Heat may be inadvertently be dissipated away from the heating chamber via radiation. Heat may inadvertently be dissipated away from the heating chamber by heat conduction via components of the aerosol-generating device. Heat may inadvertently be dissipated away from the heating chamber by heat conduction via components of the aerosol-generating article, for example via the aerosol-forming substrate. Heat dissipation away from the heating chamber may cause heating of components of the device that are not intended to be heated. For example, a housing of the device to be grasped by a user may become uncomfortably hot. Heat dissipation away from the heating chamber may cause heat losses within the heating chamber. Heat losses within the heating chamber may result in a less efficient heating. An excess amount of energy may be required to heat the heating chamber to a desired temperature.

US 10 729 176 B2 and WO 2022/228154 A1 relate to heaters for aerosol-generating devices.

It would be desirable to have an aerosol-generating device that may reduce heat losses from the heating chamber. It would be desirable to thermally insulate the heating chamber with respect to other components of the aerosol-generating device. It would be desirable to have an aerosol-generating device that may reduce heating up of the outer housing of the device to be grasped by a user. It would be desirable to have an aerosol-generating device that may provide effective thermal insulation. It would be desirable to have an aerosol-generating device that may provide thermal insulation at low manufacturing costs. It would be desirable to have an aerosol-generating device that may provide lightweight thermal insulation. It would be desirable to have an aerosol-generating device that may have an improved thermal insulation. It would be desirable to have an aerosol-generating device that may have a reduced external diameter of the heater casing. It would be desirable to have an aerosol-generating device that may have more compact device dimensions.

According to the invention there is provided a heater assembly for an aerosol-generating device. The heater assembly comprises a heating chamber for heating an aerosol-forming substrate. The heater assembly further comprises a heater casing. The heater casing is arranged around the heating chamber. The heater casing is further arranged radially distanced from the heating chamber. The heater casing further comprises an air-tight space. The air-tight space comprises a microporous insulating material. The microporous insulating material comprises aerogel.

Providing an air-tight space, comprising a microporous insulating material, around the heating chamber may reduce or avoid thermal loss due to air circulation between the interior of the heater casing and the outside air. Providing an air-tight space, comprising a microporous insulating material, around the heating chamber may also reduce or avoid thermal loss due to air convection within the air-tight space. Providing an air-tight space, comprising a microporous insulating material, around the heating chamber may reduce radiation heat transfer. Advantageously, by providing an air-tight space, comprising a microporous insulating material, around the heating chamber, the thermal insulation of the heating chamber with respect to the outer surface of the heater casing may be improved. By providing an air-tight space, comprising a microporous insulating material, around the heating chamber, a heater assembly for an aerosol-generating device is provided that may reduce heat losses from the heating chamber. By providing an air-tight space, comprising a microporous insulating material, around the heating chamber, a heater assembly for an aerosol-generating device is provided that may reduce heating up of the outer housing of the device to be grasped by a user. By providing an air-tight space, comprising a microporous insulating material, around the heating chamber, a heater assembly for an aerosol-generating device is provided that may provide effective thermal insulation. By providing an air-tight space that comprises a microporous insulating material, an improved thermal insulation at the operating temperature of the aerosol-generating device may be provided compared to an air-tight hollow space.

The "operating temperature" depends on the type of aerosol-generating device and on the aerosol-forming substrate that is used. The operating temperature of the aerosol-generating device may lie between 150 and 300 degrees Celsius. The operating temperature of the aerosol-generating device may lie between 200 and 230 degrees Celsius. The operating temperature of the aerosol-generating device may not exceed 280 degrees Celsius.

An air-tight hollow space may comprise air as insulating material. However, with higher temperatures the thermal conductivity of air increases. Microporous insulating materials comprise small cavities or pores. Within these cavities air or other gaseous compositions are encapsulated, thus having a lower thermal conductivity of the microporous insulating material with rising temperatures compared to air. Microporous insulating materials may almost retain their thermal conductivity at the operating temperature of an aerosol-generating device compared to the thermal conductivity at room temperature. The low thermal conductivity of the microporous insulating material results in a better thermal insulation. Aerogel has a particularly low thermal conductivity thereby further increasing thermal insulation. A further advantage is that aerogel reduces or prevents undesired smell during heating. In other words, aerogel does not smell unpleasantly with increased temperature.

Due to the better thermal insulation, a heater casing comprising the microporous insulating material may have a reduced external diameter. Providing a heater casing with an air-tight space that comprises the microporous insulating material may result in an aerosol-generating device that may have more compact device dimensions.

As used herein, the terms "upstream" and "downstream" are used to describe the relative positions of components, or portions of components, of the aerosol-generating device in relation to the direction in which airflows through the aerosol-generating device during use thereof. Aerosol-generating devices according to the invention comprise a proximal end through which, in use, an aerosol exits the device. The proximal end of the aerosol-generating device may also be referred to as the mouth end or the downstream end. The mouth end is downstream of the distal end. The distal end of the aerosol-generating article may also be referred to as the upstream end. Components, or portions of components, of the aerosol-generating device may be described as being upstream or downstream of one another based on their relative positions with respect to the airflow path of the aerosol-generating device.

A proximal end of the heater assembly according to the invention is configured to be arranged within an aerosol-generating device in a direction towards the mouth end or downstream end of the device. A distal end of the heater assembly according to the invention is configured to be arranged within an aerosol-generating device in a direction towards the distal end or upstream end of the device. A longitudinal axis of the heating chamber may extend between the proximal end of the heating chamber and the distal end of the heating chamber. A longitudinal axis of the heating chamber may extend between the proximal end of the heater assembly and the distal end of the heater assembly.

The heating chamber may be configured for at least partly receiving an aerosol-forming substrate. The heating chamber may comprise a cavity into which the aerosol-forming substrate may be inserted. The aerosol-forming substrate may be part of an aerosol-generating article. The cavity may have a shape corresponding to the shape of the aerosol-generating article to be received in the cavity. The cavity may have a circular cross-section. The cavity may have an elliptical or rectangular cross-section. The cavity may have an inner diameter corresponding to the outer diameter of the aerosol-generating article.

The heating chamber may comprise an opening at a proximal end of the heating chamber for receiving the aerosol-forming substrate. The opening may also serve as an air outlet. The heating chamber may comprise an air inlet at a distal end of the heating chamber.

The heating chamber may have an elongate shape. The heating chamber may be a hollow tube. The hollow tube may be formed from a wall of the heating chamber. The wall of the heating chamber may comprise or may be made of a metal or an alloy. The wall of the heating chamber may comprise or may be made of stainless steel.

The heater casing may be arranged radially distanced from the heating chamber at a distance d. The distance d may be measured in a direction orthogonal to the longitudinal axis of the heating chamber. The heating chamber may comprise a wall of the heating chamber. The heater casing may comprise a wall of the heater casing. The distance d may be measured in a radial direction between the wall of the heating chamber and the wall of the heater casing. The distance d may be measured in a radial direction between an outer side of the wall of the heating chamber and an inner side of the wall of the heater casing.

The aerogel may be a silicate aerogel. Preferably, the aerogel is of type Chemical Abstracts Service (CAS) number 11296-00-8. Preferably, the aerogel is of type European Commission (EC) number 231-545-4.

An aerogel is a type of gel from which the liquid has been removed in such a way as to minimize collapse or change in the structure as the water is removed.

The microporous insulating material may comprise resin, preferably a polymer resin.

The polymer resin may provide the microporous insulating material with flexibility so that the microporous insulating material layer can be wrapped around the heating chamber.

The microporous insulating material may consist of aerogel and polymer resin.

The microporous insulating material may comprise between 0.5 wt% and 50 wt%, preferably between 0.7 wt% and 40 wt%, more preferably between 1 wt% and 30 wt%, of the polymer resin.

The microporous insulating material may comprise between 1 wt% and 50 wt%, preferably between 5 wt% and 45 wt%, more preferably between 10 wt% and 40 wt%, more preferably between 20 wt% and 40 wt%, most preferably around 30 wt%, of the polymer resin.

The microporous insulating material may comprise between 1 wt% and 99 wt%, preferably between 50 wt% and 90 wt%, more preferably between 60 wt% and 80 wt%, most preferably around 70 wt%, of the aerogel.

According to the invention the air-tight space comprises a polyimide layer. The polyimide layer may be arranged around the microporous insulating material. The polyimide layer may be arranged in direct contact with the microporous insulating material.

The polyimide layer may hold the microporous insulating material. The polyimide layer may hold the microporous insulating material against the heating chamber. The microporous insulating material may be sandwiched between the polyimide layer and the heating chamber. The polyimide layer may partly cover the periphery of the microporous insulating material. The polyimide layer may fully cover the periphery of the microporous insulating material.

A gap may be provided between the polyimide layer and the heater casing. The gap may prevent a thermal bridge between the polyimide layer and the heater casing.

The microporous insulating material may be arranged in direct contact with the heating chamber.

The heater assembly may further comprise a heat dissipation element arranged at least partly surrounding the heating chamber. The heat dissipation element may be provided as a graphene layer. The graphene layer may be provided as a coating.

The heat dissipation element may be arranged between the microporous insulating material and the heating chamber.

The heat dissipation element may be arranged within the air-tight space. The heat dissipation element may be arranged as a coating on the periphery of the heating chamber. Alternatively, the heat dissipation element may be arranged as a coating on an inner surface of the microporous insulating material.

The heat dissipation element may synergistically interact with the microporous insulating material to improve the overall thermal performance. Without being bound to any theory, we believe the heat dissipation element may distribute the heat evenly over the periphery of the heating chamber while the microporous insulating material may then prevent this distributed thermal energy from escaping at least in a radial outwards direction. In addition, the heat dissipation element may have properties described in the following that may further reduce heat dissipation in a radial outwards direction.

The heat dissipation element may be made from a material that dissipates heat predominantly in one or both of an axial and tangential direction with respect to a longitudinal axis of the heating chamber.

The heat dissipation element may dissipate heat less in a radial direction than in the axial and tangential directions with respect to the longitudinal axis of the heating chamber.

The term 'predominantly' and 'less' preferably refer to the physical properties of the material of the heat dissipation element, particularly that heat dissipation is higher in at least one of an axial direction and a tangential direction of the heat dissipation element arranged at least partly surrounding the heating chamber than in a radial direction of the heat dissipation element. More preferably, heat dissipation is higher in at least one of the axial direction and the tangential direction in comparison with the radial direction by a factor of 2, preferably by a factor of 3, more preferably by a factor of 4, most preferably by a factor of 5.

The heat dissipation may be determined by measuring the temperature difference between one point of a material and a distanced second point. The higher the temperature difference, the higher the heat dissipation in the direction of the measurement points.

As a consequence, heat less from the heating chamber to the directly surrounding housing of the aerosol-generating device and more into the rest of the aerosol-generating device so that the overall heat is distributed more evenly throughout the aerosol-generating device.

The heat dissipation element may be made of graphene. Graphene has the advantage of having anisotropic characteristics concerning its thermal insulation properties. Thermal insulation is relatively poor in an X and Y direction, while thermal insulation is high in a Z direction. The graphene may be arranged surrounding the heating chamber such that the X and Y directions of the graphene correspond to the axial and tangential directions with respect to the longitudinal axis of the heating chamber. As a consequence, heat is dissipated well in the axial and tangential directions. The Z direction of the graphene corresponds to the radial direction with respect to the longitudinal axis of the heating chamber. As a consequence, heat is dissipated poorly in the radial direction such that the surrounding housing of the aerosol-generating device does not become too hot.

Generally, any heat dissipation element made from a material having anisotropic thermal insulation properties as described above with respect to graphene may be utilized to improve the transport of heat away from the heating chamber in an axial and tangential directions.

The heat dissipation element may fully surround the heating chamber. In other words, the heat dissipation elements may surround the outer periphery of the heating chamber.

The heat dissipation element may extend over the full length of the heating chamber. Preferably, the complete outer surface of the heating chamber is covered by the heat dissipation element.

The heat dissipation element may extend over the heating chamber in a distal direction. This has the advantage that heat is dissipated further into the aerosol-generating device such that the overall heat can be dissipated more uniformly into the ambient environment without creating any hotspots on the housing of the aerosol-generating device that may be unpleasant for a user to touch.

As used herein, the term 'axial' refers to a direction along or parallel to the longitudinal axis of the heating chamber. The longitudinal axis of the heating chamber is preferably identical to the longitudinal axis of the aerosol-generating device or parallel to the longitudinal axis of the aerosol-generating device.

As used herein, the term 'tangential' refers to a direction along or parallel to a tangent with reference to the longitudinal axis of the heating chamber.

As used herein, the term 'radial' refers to a direction perpendicular to the axial direction and perpendicular to the tangential direction. This term refers to a direction in which the radius of the heating chamber would be measured by a person skilled in the art.

The heat dissipation element may be formed from one of a rectangular sheet, a T-shaped sheet and two connected rectangular sheets.

If the heat dissipation element is formed from a rectangular sheet, the dissipation element may only surround the heating chamber. Alternatively, the rectangular sheet can preferably be dimensioned such that the heat dissipation element surrounds the heating chamber as well as a portion of the area distal of the heating chamber. As described herein, heat may thus be dissipated more uniformly throughout the aerosol-generating device.

In case the heat dissipation element is formed from a T-shaped sheet, the 'head' of the sheet could be wrapped around the heating chamber, while the 'stem' of the sheet may further extend into the aerosol-generating device in a distal direction. Again, heater may more uniformly be dissipated into the aerosol-generating device by providing such a heat dissipation element.

Finally, the heat dissipation element may be formed from two connected rectangular sheets. In this embodiment, one of the rectangular sheets is preferably arranged surrounding the heating chamber, while the other rectangular sheet is arranged preferably distal of the heating chamber to dissipate heat more uniformly into the aerosol-generating device. The connection between the rectangular sheets guarantees that the heat can be transferred from the sheet wrapped around the heating chamber to the sheet distal of the heating chamber.

As a preferred embodiment, the heat dissipation element may be provided as a coating. The heat dissipation element may be provided as a coating on one or both of the periphery of the heating chamber and the microporous insulating material.

The distance d between the heating chamber and the heater casing may be between 1.5 millimeters and 7 millimeters. The distance d between the heating chamber and the heater casing may be between 2 millimeters and 4 millimeters, preferably about 3.1 millimeters.

The heater casing may be coaxially aligned around the heating chamber. The heating chamber and the heater casing may have matching shapes. The matching shapes may allow to provide a constant radial distance d between the heater casing and the heating chamber.

The wall of the heater casing may match the shape of the wall of the heating chamber along the longitudinal axis of the heating chamber such that the distance d may be approximately constant. For example, the heating chamber may be a hollow tube and the wall of the heater casing may be a cylindrical wall being coaxially aligned around the heating chamber. The distance d may be measured in a radial direction between the outer diameter of the hollow tube of the heating chamber and the inner diameter of the cylindrical wall of the heater casing. For example, the heating chamber may be a hollow truncated cone and the wall of the heater casing may be a coaxially aligned conical wall. The skilled person will understand that other types of matching shapes will be possible. For example, the matching shapes may be curved or wavy, or may comprise a combination of different shapes along the longitudinal axis of the heating chamber.

The heating chamber and the heater casing may have deviating shapes. The shape of the wall of the heater casing may, to some extent, deviate from the shape of the wall of the heating chamber along the longitudinal axis of the heating chamber. The shape of the wall of the heater casing may deviate from the shape of the wall of the heating chamber along the longitudinal axis of the heating chamber such that the distance d does not vary by more than 1 millimeter along the longitudinal axis of the heating chamber. For example, the heating chamber may be a right circular hollow cylinder and the wall of the heater casing may be a slightly conical hollow cylinder being coaxially aligned around the heating chamber. Due to the conical shape of the wall of the heater casing, the distance d may vary along the longitudinal axis of the heating chamber by not more than 1 millimeter.

An external diameter of the heater casing may be measured in a direction orthogonal to the longitudinal axis of the heating chamber. An external diameter of the heater casing may be between 8 millimeters and 20 millimeters, preferably between 14 millimeters and 18 millimeters and preferably about 16 millimeters.

An external diameter of the heating chamber may be measured in a direction orthogonal to the longitudinal axis of the heating chamber. A ratio of an external diameter of the heater casing to an external diameter of the heating chamber may be between 1.3 and 3.5, preferably between 1.5 and 2.5, more preferably about 2.0. In particularly, in one embodiment the external diameter of the heating chamber may be about 5.6 millimeters and the external diameter of the heater casing may be about 17 millimeters, resulting in a ratio of about 3.0. In one embodiment the external diameter of the heating chamber may be about 5.6 millimeters and the external diameter of the heater casing may be about 16.5 millimeters, resulting in a ratio of about 2.95. In one embodiment the external diameter of the heating chamber may be about 7.6 millimeters and the external diameter of the heater casing may be about 16.5 millimeters, resulting in a ratio of about 2.17.

The air-tight space is hermetically sealed from the outside air. In other words, the interior of the air-tight space is not in fluid connection with the outside air. Thereby, thermal losses due to circulation of gases between the air-tight space and the air outside of the heater assembly may be avoided.

The air-tight space may be at ambient pressure. The gas pressure within the air-tight space may be between 0.9 bar and 1.1 bar, preferably about 1.0 bar. The air-tight space may be filled with a gaseous composition at about ambient pressure at about 20 degrees Celsius. Temperature-dependent variations of the gas pressure within the air-tight space may occur, as known to those skilled in the art. Providing an air-tight space at ambient pressure may be less costly to manufacture then an evacuated air-tight space under vacuum. Vacuum-based thermal insulations may be more costly to manufacture.

It has been found that an air-tight hollow space with a distance d between 1.5 millimeters and 7 millimeters sufficiently reduces thermal losses. When providing such a distance d, air or other gaseous composition, enclosed within the air-tight space may be considered as still air. Still air, or non-moving air, additionally reduces air convection within the air-tight space. Thermal losses due to air convection within the air-tight space may be reduced.

The thermal conductivity of air increases with rising temperatures. The thermal conductivity of air at 25 degrees Celsius is about 0.0262 W/m·K. At an operating temperature of 280 degrees Celsius, the thermal conductivity of air is already about 0.043 W/m·K. Therefore, using only air in an air-tight hollow space as insulating material requires a relatively large thickness of the air gap to provide a sufficient thermal insulation.

Microporous insulating materials may have a lower thermal conductivity then air at room temperature. At higher temperatures, the difference between the thermal conductivities of air and microporous insulating materials may be even greater. The thermal conductivity of microporous insulating materials may not increase as rapidly as the thermal conductivity of air. Microporous insulating materials may almost keep their thermal conductivity even at elevated temperatures. For example, the microporous insulating material may have a thermal conductivity at 20 degrees Celsius of 0.018 W/m·K. At 200 degrees Celsius, the thermal conductivity is 0.022 W/m·K. At a temperature of 400 degrees Celsius, the thermal conductivity increases to 0.028 W/m·K according to ASTM C177. The thermal conductivity of this exemplary microporous insulating material is even at higher temperatures than the maximum operating temperature of an aerosol-generating device almost the same as air at room temperature. A lower thermal conductivity results in a better thermal insulation.

An air-tight space comprising an insulating material with a lower thermal conductivity may have a smaller thickness while providing still a sufficient thermal insulation. An air-tight space which comprises a microporous insulating material instead of an air-tight hollow space comprising only air may have a smaller distance d. A smaller distance d may lead to a smaller external diameter of the aerosol-generating device.

Suitable microporous insulation materials for the present invention may have a pore diameter of below 100 nanometers, preferably below 70 nanometers, more preferably below 50 nanometers, more preferably below 20 nanometers, more preferably below 2 nanometers.

The microporous insulating material may be inorganic. The microporous insulating material may be a ceramic. The microporous insulating material may comprise silica (SiO₂). The microporous insulating material may comprise pyrogenic silica. The microporous insulating material may comprise other components like opacifiers and fibers. The opacifier may scatter infrared radiation and thereby reduce transmission of infrared radiation.

The microporous insulating material of the disclosure may have a nominal density of below 500 kg/m³, preferably of below 400 kg/m³, more preferably of below 300 kg/m³.

The microporous insulating material of the present invention may have, at 20 degrees Celsius and according to ASTM C177, a thermal conductivity of below 0.05 W/m·K, preferably of below 0.04 W/m·K, more preferably of below 0.03 W/m·K, more preferably of below 0.02 W/m K. The microporous insulating material may have, at a temperature of 280 degrees Celsius and according to ASTM C177, a thermal conductivity of below 0.05 W/m·K, preferably of below 0.04 W/m·K, more preferably of below 0.03 W/m·K. The thermal conductivity of the microporous insulating material may increase, at a temperature of 280 degrees Celsius compared to the thermal conductivity of the microporous insulating material at 20 degrees Celsius, by a maximum of 40 percent, preferably by a maximum of 30 percent, more preferably by a maximum of 20 percent.

At the operating temperature of the aerosol-generating device, the air-tight space comprising the microporous insulating material may have a lower thermal conductivity than the same air-tight hollow space comprising instead ambient air.

The air-tight space may be completely filled with the microporous insulating material.

Alternatively, the air-tight space may not completely be filled with the microporous insulating material. By not completely filling the air-tight space with the microporous insulating material, the weight of the aerosol-generating device may be reduced. However, the air-tight space may at least be partially filled with the microporous insulating material. The air-tight space may further be at least partly filled with a gaseous composition. The gaseous composition may be at ambient pressure. The gaseous composition may be air. The gaseous composition may comprise one or more of nitrogen, argon, carbon dioxide, oxygen, krypton, sulfur hexafluoride or mixtures thereof or other suitable gaseous compositions.

By providing the air-tight space additionally with a gaseous composition, the weight of the aerosol-generating device may be reduced. Providing the air-tight space with a gaseous composition may reduce manufacture costs.

The volume of the air-tight space filled with the microporous insulating material may be 30 volume percent, 40 volume percent, 50 volume percent, 60 volume percent, 70 volume percent, 80 volume percent or 90 volume percent. The ratio of the microporous insulating material and the gaseous composition may depend upon the operating temperature of the aerosol-generating device. An aerosol-generating device having a higher operating temperature may require more microporous insulating material.

The air-tight space may comprise at least one air gap. The gaseous composition may be provided in the air gap.

The air-tight space may comprise one air gap. The air-tight space may comprise two air gaps. The air-tight space may comprise three air gaps. The microporous insulating material may be sandwiched in radial direction between two air gaps.

The air gap may have a thickness measured in a direction orthogonal to the longitudinal axis of the heating chamber. The thickness of the air gap may be between 0.5 millimeter and 4 millimeters, preferably between 1 millimeter and 3 millimeters, more preferably about 2 millimeters.

The one or more air gaps may be within the microporous insulating material. The one or more air gaps may extent in a direction parallel to the longitudinal axis of the aerosol-generating device. The one or more air gaps may have a longitudinal extension that is the same or shorter than the longitudinal extension of the microporous insulating material. The one or more air gaps may have a circular cross section. Alternatively, the one or more air gaps may not extend around the full perimeter of the microporous insulating material. The one or more air gaps may be completely surrounded by microporous insulating material. The one or more air gaps may be in direct contact with the first and second connecting walls as described in more detail below. The one or more air gaps may be in direct contact with the heating chamber. The one or more air gaps may be in direct contact with the heater casing.

Providing an air-gap within the air-tight space may reduce the weight of the aerosol-generating device. By providing an air-gap within the air-tight space, the manufacturing costs may be reduced.

The microporous insulating material may be in direct contact with the heating chamber. The microporous insulating material may be surrounded by the air gap. The temperatures around the heating chamber may degrease radially with increasing distance from the longitudinal axis of the heating chamber. Microporous insulating materials may provide a better thermal insulation at higher temperatures then for example air. An assembly in which the microporous insulating material is in direct contact with the heating chamber, surrounded by the air gap, may have an improved thermal insulation than an assembly which is arranged vice versa.

The heater assembly may further comprise a first connecting wall connecting the heating chamber and the heater casing and a second connecting wall connecting the heating chamber and the heater casing. The air-tight space may be defined between the heating chamber, the heater casing, and the first and second connecting walls. The air-tight space may be limited by the walls of the heating chamber and heater casing, and the first and second connecting walls. The first and second connecting walls may provide an easy assembly of the air-tight space. The first and second connecting walls may provide a simple manufacture of the air-tight space. Providing the first and second connecting walls may ensure a defined distance d of the heater casing from the heating chamber. By providing the first and second connecting walls, a correct placement of the microporous insulating material may be ensured. The first and second connecting walls may be in contact with the microporous insulating material, thereby preventing heat loss via air convection on the proximal and distal ends of the microporous insulating material.

Each of the first and second connecting walls may extent between the wall of the heating chamber and the wall of the heater casing. The first and second connecting walls may sealingly connect the heater casing with the outer wall of the heating chamber. The connecting walls may be oriented perpendicular to the longitudinal axis of the heating chamber. The first connecting wall may be a proximal connecting wall. The second connecting wall may be a distal connecting wall.

The microporous insulating material may be in direct contact with the heating chamber. The microporous insulating material may be in direct contact with the heater casing. The microporous insulating material may be in direct contact with the first and second connecting walls. The microporous insulating material may be in direct contact with the heating chamber and the heater casing. The microporous insulating material may be in direct contact with the heating chamber, with the heater casing and with the first and second connecting walls. The microporous insulating material may be mounted between the first and second connecting walls. The microporous insulating material may be arranged spanning the distance between the first and second connecting walls. The microporous insulating material may be mounted between the first and second connecting walls while not being in contact with one or both of the heater casing and the heating chamber.

The microporous insulating material may have an elongate extension. The microporous insulating material may extend parallel to the longitudinal axis of the heating chamber. The microporous insulating material may be a hollow tube extending around the heating chamber.

The microporous insulating material may have a thickness measured in a direction orthogonal to the longitudinal axis of the heating chamber. The microporous insulating material may have the same thickness then the distance d. The thickness of the microporous insulating material may be between 1 millimeter and 7 millimeters, preferably between 2 millimeters and 6 millimeters, more preferably between 3 millimeters and 5 millimeters.

The microporous insulating material may be formed from one single element. Alternatively, the microporous insulating material may be formed from at least two insulating elements. The microporous insulating material may be formed from two insulating elements. The microporous insulating material may be formed from at least a first insulating element comprising at least a first connection element and a second insulating element comprising at least a second connection element. The first and second connection elements may be configured as matching connection elements. When connected, the matching connection elements may enable a connection of the first and second microporous insulating elements. The connected first and second connection elements may result in the overall insulating material forming a hollow tube. The hollow tube may have an inner diameter corresponding to the outer diameter of the heating chamber. Providing the microporous insulating material from two insulating elements may provide an easy assembly of the microporous insulating material around the heating chamber. By forming the microporous insulating material from two insulating elements, a perfect form fit of the microporous insulating material with the heating chamber may be provided. Providing a perfect form fit of the microporous insulating material with the heating chamber may ensure a better thermal insulation.

The first and second connection elements may be configured as male and female connection elements, as form-fit connection elements, as snap-fit connection elements, as bayonet connection elements or mixtures thereof or other commonly used connection elements known to the skilled person. The first connection element may comprise a male connection element and the second connection element may comprise a female connection element. The first connection element and the second connection element may comprise form-fit connection elements. The first connection element and the second connection element may comprise snap-fit connection elements. The first connection element and the second connection element may comprise bayonet connection elements.

The microporous insulating material may be configured as a two-part assembly. The two-part assembly may comprise the first and second insulating element. The first and second insulating elements may for example be in the form of hollow half-cylinder elements. The hollow half-cylinder elements may comprise the matching first and second connection elements. When connected, the hollow half-cylinder elements may form a single hollow tube. The inner diameter of the hollow tube may have the same size than the outer diameter of the heating chamber. Thereby, a convenient assembly may be ensured. Whereas a microporous insulating material formed as one element, having the same inner diameter than the external diameter of the heating chamber, may be more difficult to assemble around the heating chamber due to friction. A close proximity or direct contact of the microporous insulating material with the heating chamber may improve the thermal insulation of the heating chamber.

The heating chamber may comprise a temperature sensor. The temperature sensor may be on the top of the heating chamber. The microporous insulating material may have a matching shape with the temperature sensor. The microporous insulating material may have a cavity facing the temperature sensor. The microporous insulating material may be completely closed around the heating chamber. The temperature sensor may be enclosed by the microporous insulating material. The temperature sensor may be sandwiched between the heating chamber and the microporous insulating material.

The heater assembly may further comprise a heating element. The heating chamber may comprise the heating element.

The heating element may be arranged at least partly around the heating chamber. The heating element may be arranged at least partly around the wall of the heating chamber. Preferably, the heating element is arranged fully coaxially surrounding the outer perimeter of the wall of the heating chamber. The heating element may be arranged along at least a part of the longitudinal axis of the heating chamber.

The heating element may comprise one or more electrically conductive tracks on an electrically insulating substrate. The one or more electrically conductive tracks may be resistive heating tracks. The one or more electrically conductive tracks may be configured as a susceptor to be inductively heated. The electrically insulating substrate may be a flexible substrate.

The heating element may be flexible and may be wrapped around the heating chamber. The heating element may be arranged between the heating chamber and the heater casing.

The microporous insulating material may have a longitudinal extension that is the same or larger than the longitudinal extension of the heating element. Thereby a proper thermal insulation of the heat generated by the heating element may be ensured.

The microporous insulating material may extend around the heating element. The microporous insulating material may be in direct contact with the heating element.

In all of the aspects of the disclosure, the heating element may comprise an electrically resistive material. Suitable electrically resistive materials include but are not limited to: semiconductors such as doped ceramics, electrically "conductive" ceramics (such as, for example, molybdenum disilicide), carbon, graphite, metals, metal alloys and composite materials made of a ceramic material and a metallic material. Such composite materials may comprise doped or undoped ceramics.

As described, in any of the aspects of the disclosure, the heating element may be part of the heating chamber of the heater assembly for an aerosol-generating device. The heater assembly may comprise an internal heating element or an external heating element, or both internal and external heating elements, where "internal" and "external" refer to the aerosol-forming substrate. An internal heating element may take any suitable form. For example, an internal heating element may take the form of a heating blade. Alternatively, the internal heater may take the form of a casing or substrate having different electro-conductive portions, or an electrically resistive metallic tube. Alternatively, the internal heating element may be one or more heating needles or rods that run through the center of the aerosol-forming substrate. Other alternatives include a heating wire or filament, for example a Ni-Cr (Nickel-Chromium), platinum, tungsten or alloy wire or a heating plate. Optionally, the internal heating element may be deposited in or on a rigid carrier material. In one such embodiment, the electrically resistive heating element may be formed using a metal having a defined relationship between temperature and resistivity. In such an exemplary device, the metal may be formed as a track on a suitable insulating material, such as ceramic material, and then sandwiched in another insulating material, such as a glass. Heaters formed in this manner may be used to both heat and monitor the temperature of the heating elements during operation.

An external heating element may take any suitable form. For example, an external heating element may take the form of one or more flexible heating foils on a dielectric substrate, such as polyimide. The flexible heating foils can be shaped to conform to the perimeter of the substrate receiving cavity. Alternatively, an external heating element may take the form of a metallic grid or grids, a flexible printed circuit board, a molded interconnect device (MID), ceramic heater, flexible carbon fibre heater or may be formed using a coating technique, such as plasma vapour deposition, on a suitable shaped substrate. An external heating element may also be formed using a metal having a defined relationship between temperature and resistivity. In such an exemplary device, the metal may be formed as a track between two layers of suitable insulating materials. An external heating element formed in this manner may be used to both heat and monitor the temperature of the external heating element during operation.

The heating element advantageously heats the aerosol-forming substrate by means of heat conduction. The heating element may be at least partially in contact with the substrate, or the carrier on which the substrate is deposited. Alternatively, the heat from either an internal or external heating element may be conducted to the substrate by means of a heat conductive element.

During operation, the aerosol-forming substrate may be completely contained within the aerosol-generating device. In that case, a user may puff on a mouthpiece of the aerosol-generating device. Alternatively, during operation, a smoking article containing the aerosol-forming substrate may be partially contained within the aerosol-generating device. In that case, the user may puff directly on the smoking article.

The heating element may be configured as an induction heating element. The induction heating element may comprise an induction coil and a susceptor. In general, a susceptor is a material that is capable of generating heat, when penetrated by an alternating magnetic field. According to the invention, the susceptor may be electrically conductive or magnetic or both electrically conductive and magnetic. An alternating magnetic field generated by one or several induction coils heat the susceptor, which then transfers the heat to the aerosol-forming substrate, such that an aerosol is formed. The heat transfer may be mainly by conduction of heat. Such a transfer of heat is best, if the susceptor is in close thermal contact with the aerosol-forming substrate. When an induction heating element is employed, the induction heating element may be configured as an internal heating element as described herein or as an external heater as described herein. If the induction heating element is configured as an internal heating element, the susceptor element is preferably configured as a pin or blade for penetrating the aerosol-generating article. If the induction heating element is configured as an external heating element, the susceptor element is preferably configured as a cylindrical susceptor at least partly surrounding the cavity or forming the sidewall of the cavity.

The heating chamber may comprise a central region comprising the heating element. The term central region refers to the longitudinal direction. The heating chamber may further comprise a proximal region and a distal region. The proximal region and the distal region may be distanced from the heating element in a longitudinal direction. During use, the proximal and distal regions may be colder than the central region of the heating chamber. The first connecting wall may contact the heating chamber in the proximal region and the second connecting wall may contact the heating chamber in the distal region. The first and second connecting walls may thus contact the heating chamber at the coldest points of the heating chamber during use. Thereby, heat losses from the heating chamber to the connecting walls and the heater casing may be additionally reduced. Thermal insulation may be additionally improved.

The wall of the heating chamber may be made of stainless steel. This may beneficially enhance the effect that, during use, the proximal region and the distal region may be colder than the central region of the heating chamber.

The thickness of the wall of the heater casing may be below about 2 millimeters. The thickness of the wall of the heater casing may be below 1.2 millimeter, preferably about 0.8 millimeter. The thickness of one or both of the first and second connecting walls may be below 1.2 millimeter, preferably about 0.8 millimeter. Having such thin walls, the thermal mass of the heater casing may be minimized. This may additionally reduce heat losses from the heating chamber.

One or more of the walls of the heater casing and the first and second connecting walls may be made of a low thermal conductivity material. This may additionally reduce heat losses from the heating chamber. The wall of the heater casing may comprise or may be made of a plastic material. The first and second connecting walls may comprise or may be made of a plastic material. The plastic material may comprise one or both of a polyaryletherketone (PAEK), a polyether ether ketone (PEEK), and a polyphenylene sulfone (PPSU). Preferably, the plastic material comprises a polyphenylene sulfone (PPSU).

The inner side of the wall of the heater casing may comprise a metal coating. The inner side of one or both of the first and second connecting walls may comprise a metal coating. The metal coating may reduce the emissivity of the inner side of the wall. For example, the emissivity of a PEEK wall may be reduced from about 0.95 to about 0.4. The metal coating may reflect heat radiation emitted from the heating chamber. The metal coating may provide additional heat insulation of the heating chamber with respect to the outside of the heater casing. The metal coating may be a low emissivity metal coating. The metal coating may comprise oner or more of aluminium, gold, and silver.

The invention further relates to an aerosol-generating device comprising the heater assembly as described herein.

Preferably, the aerosol-generating device comprises a power supply configured to supply power to the heating element. The power supply preferably comprises a power source. Preferably, the power source is a battery, such as a lithium ion battery. As an alternative, the power source may be another form of charge storage device such as a capacitor. The power source may require recharging. For example, the power source may have sufficient capacity to allow for the continuous generation of aerosol for a period of around six minutes or for a period that is a multiple of six minutes. In another example, the power source may have sufficient capacity to allow for a predetermined number of puffs or discrete activations of the heater assembly.

The power supply may comprise control electronics. The control electronics may comprise a microcontroller. The microcontroller is preferably a programmable microcontroller. The electric circuitry may comprise further electronic components. The electric circuitry may be configured to regulate a supply of power to the heater assembly. Power may be supplied to the heater assembly continuously following activation of the system or may be supplied intermittently, such as on a puff-by-puff basis. The power may be supplied to the heater assembly in the form of pulses of electrical current.

The invention further relates to an aerosol-generating system comprising the aerosol-generating device as described herein and an aerosol-forming substrate configured to be at least partly inserted into the heating chamber. The aerosol-forming substrate may be part of an aerosol-generating article and the aerosol-generating article may be configured to be at least partly inserted into the heating chamber.

As used herein, the term "aerosol-forming substrate" refers to a substrate capable of releasing volatile compounds that can form an aerosol. The volatile compounds may be released by heating or combusting the aerosol-forming substrate. As an alternative to heating or combustion, in some cases, volatile compounds may be released by a chemical reaction or by a mechanical stimulus, such as ultrasound. The aerosol-forming substrate may be solid or liquid or may comprise both solid and liquid components. An aerosol-forming substrate may be part of an aerosol-generating article.

The aerosol-forming substrate may be a solid aerosol-forming substrate. The aerosol-forming substrate may comprise both solid and liquid components. The aerosol-forming substrate may comprise a tobacco-containing material containing volatile tobacco flavour compounds which are released from the substrate upon heating. The aerosol-forming substrate may comprise a non-tobacco material. The aerosol-forming substrate may comprise an aerosol former that facilitates the formation of a dense and stable aerosol. Examples of suitable aerosol formers are glycerine and propylene glycol.

As used herein, the term "aerosol-generating article" refers to an article comprising an aerosol-forming substrate that is capable of releasing volatile compounds that can form an aerosol. An aerosol-generating article may be disposable.

As used herein, the term "aerosol-generating device" refers to a device that interacts with an aerosol-forming substrate to generate an aerosol. An aerosol-generating device may interact with one or both of an aerosol-generating article comprising an aerosol-forming substrate, and a cartridge comprising an aerosol-forming substrate. In some examples, the aerosol-generating device may heat the aerosol-forming substrate to facilitate release of volatile compounds from the substrate. An electrically operated aerosol-generating device may comprise an atomizer, such as an electric heater, to heat the aerosol-forming substrate to form an aerosol.

As used herein, the term "aerosol-generating system" refers to the combination of an aerosol-generating device with an aerosol-forming substrate. When the aerosol-forming substrate forms part of an aerosol-generating article, the aerosol-generating system refers to the combination of the aerosol-generating device with the aerosol-generating article. In the aerosol-generating system, the aerosol-forming substrate and the aerosol-generating device cooperate to generate an aerosol.

Features described in relation to one embodiment may equally be applied to other embodiments of the invention.

The invention will be further described, by way of example only, with reference to the accompanying drawings in which:
Fig. 1 shows an embodiment of a heater assembly for an aerosol-generating device;
Fig. 2 shows an embodiment of a heating chamber of a heater assembly;
Fig. 3 shows an embodiment of a heater assembly for an aerosol-generating device;
Fig. 4 shows an embodiment of a heater assembly for an aerosol-generating device;
Fig. 5 shows an embodiment of a heater assembly for an aerosol-generating device;
Fig. 6 shows an embodiment of a heater assembly for an aerosol-generating device;
Fig. 7 shows an embodiment of microporous insulating material of a heater assembly for an aerosol-generating device;
Fig. 8 shows an embodiment of an aerosol-generating device;
Fig. 9 shows an embodiment of an aerosol-generating device; and
Fig. 10 shows an embodiment of an aerosol-generating device comprising aerosol insulation.

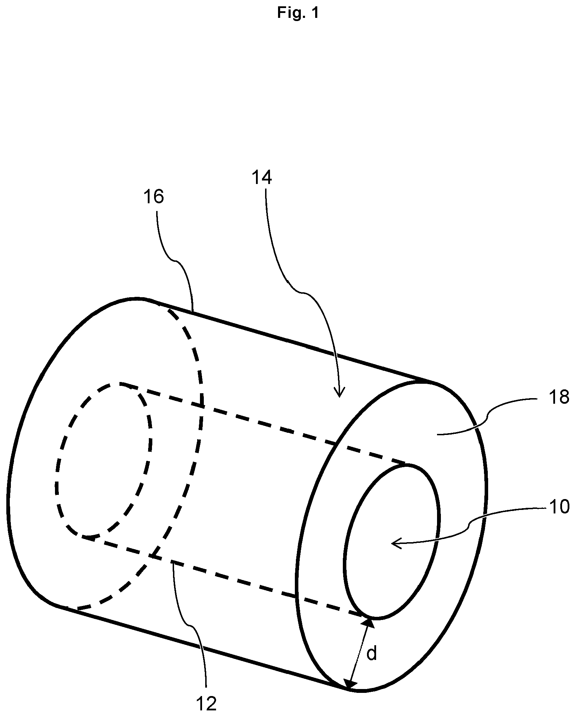

Fig. 1 schematically shows a heater assembly 10. The heater assembly 10 comprises a heating chamber 12 for heating an aerosol-forming substrate. The heating chamber 12 has an elongate shape. The heating chamber 12 comprises a wall of the heating chamber 14 circumscribing a cavity for insertion of the aerosol-forming substrate. The wall of the heating chamber 14 forms a hollow tube. The heater assembly 10 further comprises a heater casing. The heater casing is arranged coaxially around the heating chamber 12. The heater casing comprises a cylindrical wall of the heater casing 16. The heater casing is further arranged radially distanced from the heating chamber 12 at a distance d. The distance d is measured in a radial direction between the outer diameter of the hollow tube formed by the wall of the heating chamber 14 and the inner diameter of the cylindrical wall of the heater casing 16. The wall of the heating chamber 14 and the wall of the heater casing 16 have matching shapes. Thereby, the distance d is constant along the longitudinal axis of the heating chamber 12.

The heater assembly 10 further comprises a first connecting wall 18 at a proximal end of the heater assembly 10. The heater assembly 10 further comprises a second connecting wall 20 at a distal end of the heater assembly 10. The first and second connecting walls 18, 20 are oriented perpendicular to a longitudinal axis of the heating chamber 12. The heater assembly 10 further comprises an air-tight space 22. The air-tight space 22 is defined between the wall of the heating chamber 14, the wall of the heater casing 16, and the first and second connecting walls 18, 20.

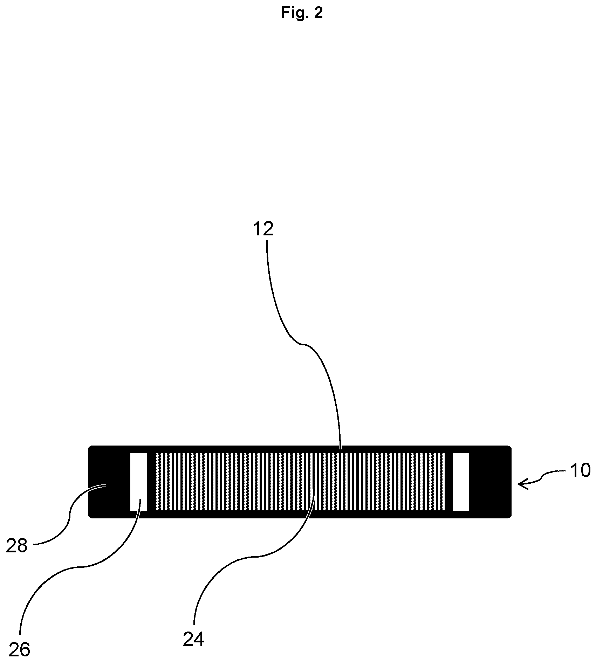

Fig. 2 shows an embodiment of a heating chamber 12. The heating chamber 12 comprises a central region comprising a heating element. The heating element is arranged partly around the heating chamber 12. The wall of the heating chamber 14 is a metal tube, preferably a stainless-steel tube. The heating element is flexible and is wrapped around the metal tube. The heating element comprises electrically conductive heating tracks 24 on an electrically insulating flexible substrate 26. In the embodiment shown, proximal and distal edge portions of the flexible substrate 26 are not covered by the heating tracks 24. In other embodiments, different regions or even the whole surface of the flexible substrate 26 may be covered by the heating tracks 24. A proximal region 28 and a distal region 30 of the heating chamber 12 are distanced from the heating element in a longitudinal direction.

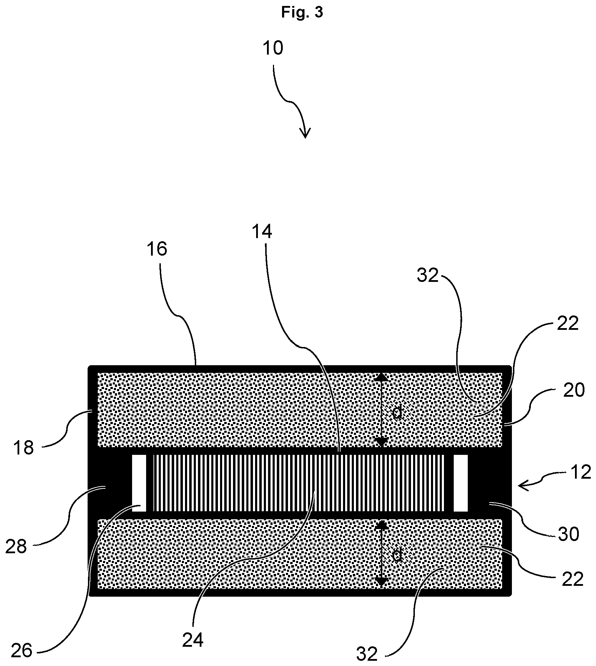

Fig. 3 shows an embodiment of a heater assembly 10 comprising the heating chamber 12 of Fig. 2. The heating element is arranged between the heating chamber 12 and the heater casing.

The first and second connecting walls 18, 20 sealingly connect the wall of the heater casing 16 with the wall of the heating chamber 14, thereby air-tightly enclosing the air-tight space 22.

The first and second connecting walls 18, 20 contact the heating chamber 12 in the proximal and distal regions 28, 30, respectively. The first and second connecting walls 18, 20 contact the heating chamber 12 at positions distanced from the heating element. The first and second connecting walls 18, 20 thus contact the heating chamber 12 at the coldest points of the heating chamber when being heated during use. Thereby, heat losses due to heat transport from the heating chamber 12 to the connecting walls 18, 20 and the heater casing via thermal conduction are additionally reduced. Thermal insulation may be additionally improved.

The air-tight space 22 comprises a microporous insulating material 32. The microporous insulating material 32 may be for example one of MICROSIL Microporous Insulation from ZIRCAR Ceramics, Inc.; Excelfrax^{®} from Unifrax I LLC and Microtherm 1000 grade from Promat Inc or other commercially available microporous insulating materials. Particularly preferred, the microporous insulating material 32 comprises, preferably consists of, silica aerogel and a polymer resin. Particularly preferred, the microporous insulating material 32 comprises up to 30% polymer resin, while the rest of the microporous insulating material 32 (1% to 99%) is silica aerogel.

In the embodiment shown in Fig. 3 the whole air-tight space 22 is filled with the microporous insulating material 32. The microporous insulating material 32 is in contact with the wall of the heating chamber 14, the heating tracks 24, the first and second connecting walls 18 and 20 and the wall of the heater casing 16. Although not shown, the microporous insulating material 32 shown in Fig. 3 may also comprise one or more air gaps extending in a direction parallel to the longitudinal axis of the aerosol-generating device. Those air gaps may be in direct contact with the wall of the heating chamber 14, the wall of the heater casing 16 or the first and second connecting walls 18 and 20. Those air gaps may have a shorter longitudinal extension then the microporous insulating material 32.

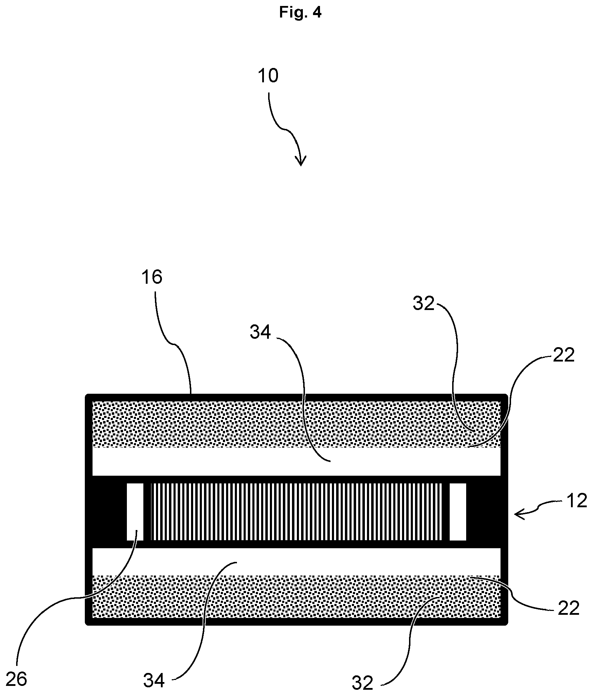

Figs. 4, 5 and 6 show alternative embodiments, in which the air-tight 22 space is only partially filled with the microporous insulating material 32. The main elements are similar to the heater assembly of Fig. 3. In the embodiments shown in Figs. 4, 5 and 6, the air-tight space 22 comprises at least one additional air gap 34. In all of these embodiments the microporous insulating material 32 is in contact with the first and second connecting walls 18 and 20. However, the microporous insulating material 32 may alternatively only be in contact with one of the first and second connecting walls 18, 20. Preferably, the microporous insulating material 32 is only in contact with the first (proximal) connecting wall 18. The microporous insulating material 32 may be mounted on the first and second connecting walls 18 and 20.

In Fig. 4 a heater assembly is shown in which the air gap 34 extends around the heating camber 12. The microporous insulating material 32 extends around the air gap 34 radially distanced from the heating chamber 12. The microporous insulating material 32 is in direct contact with the wall of the heater casing 16.

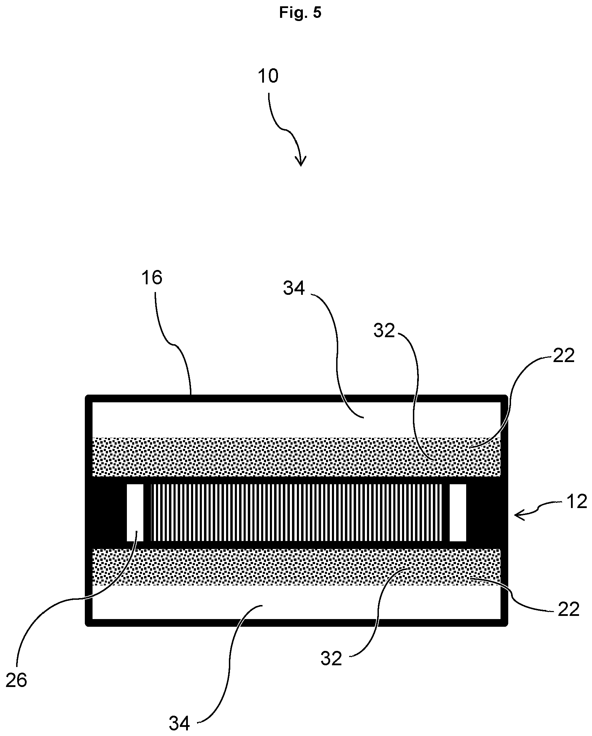

Fig. 5 shows an alternative embodiment in which the microporous insulating material 32 is in direct contact with the heating chamber 12. The air gap 34 extends around the microporous insulating material 32 radially distanced from the heating chamber 12. The air gap 34 is in direct contact with the wall of the heater casing 16.

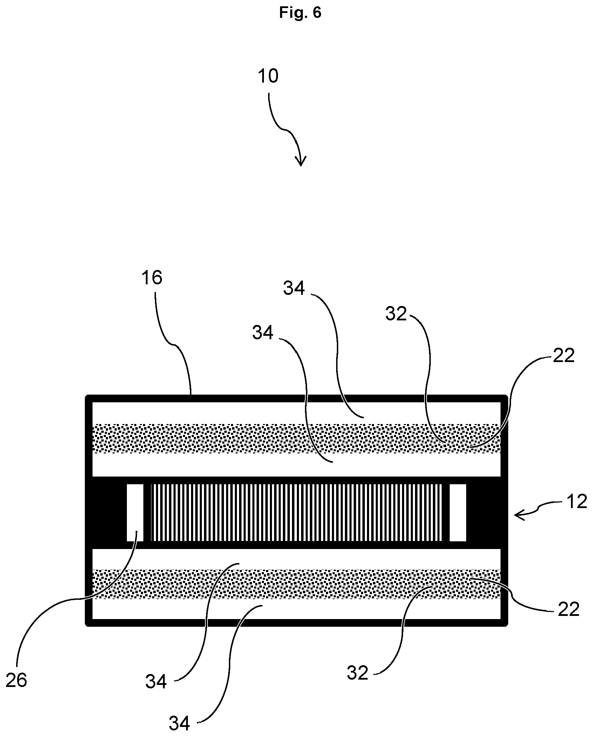

Fig. 6 shows an alternative embodiment in which the air-tight space 22 comprises two air gaps 34. One air gap 34 extends around the heating chamber 12 and is in direct connection with the heating chamber 12. Radially distanced from that air gap 34 extents the microporous insulating material 32. Followed by an additional air gap 34 which extends around the microporous insulating material 32 radially distanced from the microporous insulating material 32. The microporous insulating material 32 is sandwiched in radial direction between the two air gaps 34.

The air-tight space 22 shown in Figs. 3, 4, 5 and 6 may be filled with the microporous insulating material 32 in different ratios. For example, half of the volume of the air-tight space 22 is filled with the microporous insulating material 32. However, also other ratios are possible. For example, 20 volume percent, 30 volume percent, 40 volume percent, 50 volume percent, 60 volume percent, 70 volume percent, 80 volume percent or 90 volume percent of the air-tight space 22 is filled with the microporous insulating material 32.

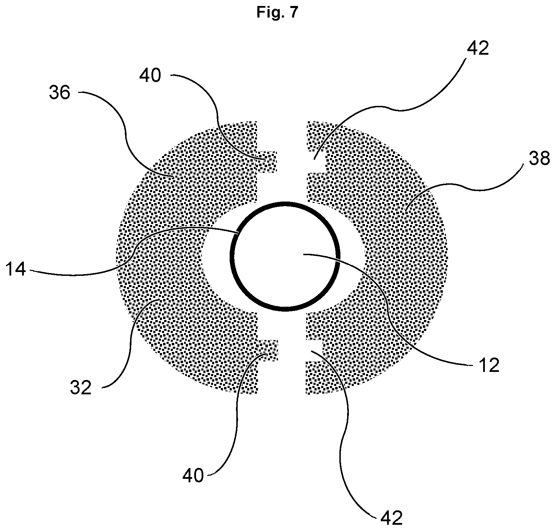

Fig. 7 shows a two-part assembly of the microporous insulating material 32. The heater assemblies 10 depicted in Figs. 3, 4, 5 and 6 can all comprise the two-part assembly of Fig. 7. However, the two-part assembly is in particular suitable for the embodiments of Fig. 3 and 5. As can be seen in Fig. 7, the microporous insulating material 32 is formed from a first insulating element 36, having a first connection element 40 and a second insulating element 38, having a second connection element 42. The first and second connection elements 40 and 42 are configured as matching connection elements. When the two first and second insulating elements 36 and 38 are connected, the first and second connection elements 40 and 42 connect with each other. The connection of the first and second connection elements 40 and 42 provides a direct contact of the first and second insulating elements 36 and 38. The first and second insulating elements 36 and 38 can have a hollow half-cylinder design as shown in Fig 7. However, other shapes and configurations are possible. When connected, the hollow half-cylinder design provides a hollow tube. The hollow tube can have the same inner diameter than the external diameter of the heating chamber 12. The hollow tube can also have the same inner diameter than the external diameter of the heating chamber 12 and heating tracks 24 taken together. By this two-part assembly, the microporous insulating material 32 can have a perfect fit with the heating chamber 12 and the heating tracks 24 being around the heating chamber. In addition, if the heating chamber comprises a temperatures sensor (not shown), the inner shape of the microporous insulating material 32 can be configured to fit to the temperature sensor. The microporous insulating material 32 may comprise a cavity facing the sensor. The cavity may have the same volume and inverse shape then the temperature sensor has. The microporous insulating material 32 can be completely closed around the heating chamber 12 and the heating tracks 24. Using a hollow tube comprising only a single element of microporous insulating material 32 may not provide such a perfect fit with the heating chamber 12.

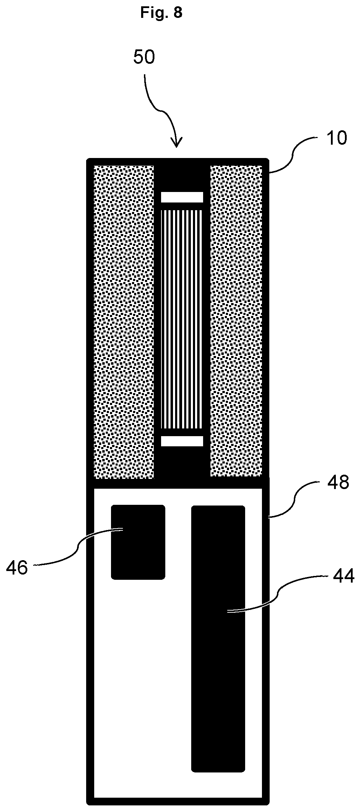

Fig. 8 shows an embodiment of an aerosol-generating device comprising the heater assembly 10 of Fig. 3. The aerosol-generating device further comprises a power supply. The power supply comprises a power source 44 and control electronics 46. The power source 44 may be a rechargeable battery. In the embodiment of Fig. 8, the wall of the heater casing 16 forms part of an outer housing 48 of the aerosol-generating device.

At opening 50, the aerosol-forming substrate may be inserted at least partly into the heating chamber 12. The aerosol-forming substrate may be part of an aerosol-generating article.

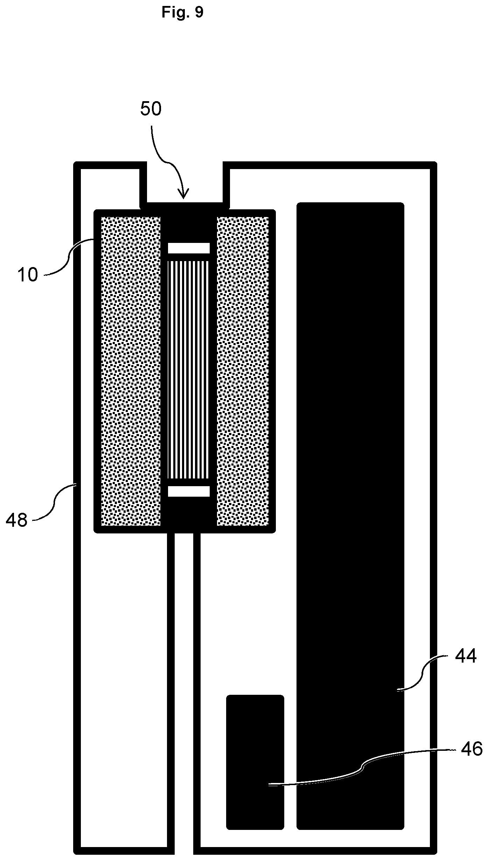

Fig. 9 shows an embodiment of an aerosol-generating device comprising the heater assembly 10 of Fig. 3. In difference to the embodiment of Fig. 8, in the embodiment of Fig. 9, the heater assembly 10 is arranged within a separate outer housing 48 of the aerosol-generating device.

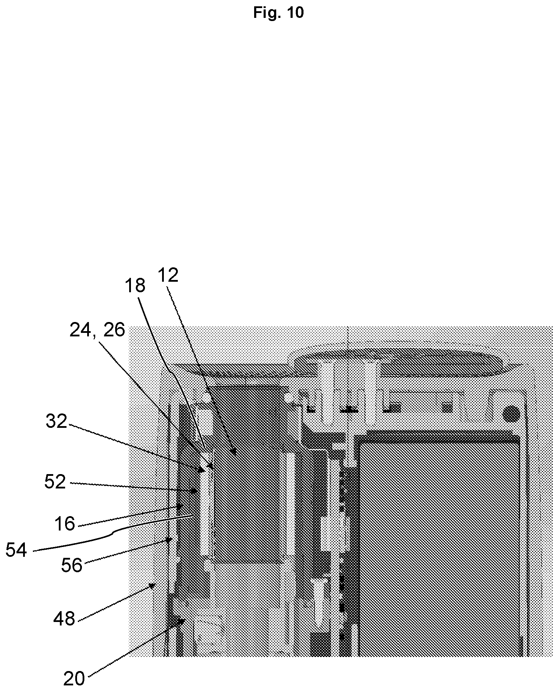

Fig. 10 shows an embodiment of an aerosol-generating device including the heater assembly 10 being arranged adjacent a proximal end of the aerosol-generating device. The flexible substrate 26 and the heating tracks 24 of the heating assembly 10 are arranged around the heating chamber 12. The microporous insulating material 32 is arranged around and in contact with the flexible substrate 26 and the heating tracks 24. The microporous insulating material 32 comprises 1% to 99% of aerogel and up to 30% of polymer resin. The microporous insulating material 32 is provided as a flexible layer due to the provision of the polymer resin so that the microporous insulating material 32 can be wrapped around the flexible substrate 26 at the heating tracks 24. To hold the microporous insulating material 32 in place, a polyimide layer 52 is arranged surrounding the microporous insulating material 32. The polyimide layer 52 a is a flexible layer. The polyimide layer 52 may partially cover the microporous insulating material 32 as shown in Fig. 10. In the embodiment shown in Fig. 10, a proximal overlap is provided between the polyimide layer 52 and the microporous insulating material 32. In other words, the microporous insulating material 32 extends beyond the polyimide layer 52 in a proximal direction. Similarly, a distal overlap is provided between the polyimide layer 52 and the microporous insulating material 32 such that the microporous insulating material 32 extends beyond the polyimide layer 52 in a distal direction. Alternatively, the polyimide layer 52 may fully cover the microporous insulating material 32.

Surrounding the polyimide layer 52, an air gap 54 is provided. The polyimide layer 52 as well as the air gap 54 are provided within the air-tight space 22. Radially outside of the air gap 54, the wall of the heater casing 16 is provided.

The microporous insulating material 32 is in direct contact with the first connecting wall 18 proximal of the microporous insulating material 32. The microporous insulating material 32 is distanced from the second connecting wall 20 distal of the microporous insulating material 32. Alternatively, the microporous insulating material 32 may also be distanced from the first connecting wall 18. As a further alternative, the microporous insulating material 32 may be in direct contact with the first connecting wall 18 as well as with the second connecting wall 20.

In the embodiment shown in figure 10, the heater casing, more particularly the wall of the heater casing 16, is mounted onto an inner frame 56 within the housing 48 of the aerosol-generating device. The inner frame 56 may hold further components of the aerosol-generating device such as the heating chamber 12.

## Claims

1. A heater assembly (10) for an aerosol-generating device, comprising
a heating chamber (12) for heating an aerosol-forming substrate;
a heater casing (16) arranged around the heating chamber (12), wherein the heater casing (16) is arranged radially distanced from the heating chamber (12), wherein the heater casing (16) comprises an air-tight space (22), and wherein the air-tight space (22) comprises a microporous insulating material (32), wherein the microporous insulating material (32) comprises aerogel, **characterised in that** the air-tight space (22) comprises a polyimide layer (52).

2. The heater assembly (10) according to claim 1, wherein the aerogel is a silicate aerogel.

3. The heater assembly (10) according to any of the preceding claims, wherein the microporous insulating material (32) comprises a polymer resin.

4. The heater assembly (10) according to claim 3, wherein the microporous insulating material (32) comprises between 0.5 wt% and 50 wt%, preferably between 0.7 wt% and 40 wt%, more preferably between 1 wt% and 30 wt%, of the polymer resin.

5. The heater assembly (10) according to claim 3 or 4, wherein the microporous insulating material (32) comprises between 1 wt% and 50 wt%, preferably between 5 wt% and 45 wt%, more preferably between 10 wt% and 40 wt%, more preferably between 20 wt% and 40 wt%, most preferably around 30 wt%, of the polymer resin.

6. The heater assembly (10) according to any of the preceding claims, wherein the microporous insulating material (32) comprises between 1 wt% and 99 wt%, preferably between 50 wt% and 90 wt%, more preferably between 60 wt% and 80 wt%, most preferably around 70 wt%, of the aerogel.

7. The heater assembly (10) according to any of the preceding claims, wherein the microporous insulating material (32) is flexible.

8. The heater assembly (10) according to any of the preceding claims, wherein the polyimide layer (52) is arranged around the microporous insulating material (32), preferably wherein the polyimide layer (52) is arranged in direct contact with the microporous insulating material (32).

9. The heater assembly (10) according to any of the preceding claims, wherein a gap (54) is provided between the polyimide layer (52) and the heater casing (16).

10. The heater assembly (10) according to any of the preceding claims, wherein the microporous insulating material (32) is arranged in direct contact with the heating chamber (12).

11. The heater assembly (10) according to any of the preceding claims, wherein the heater assembly further comprises a heat dissipation element arranged at least partly surrounding the heating chamber (12), preferably wherein the heat dissipation element is provided as a graphene layer, more preferably wherein the graphene layer is provided as a coating.

12. The heater assembly (10) according to claim **11,** wherein the heat dissipation element is arranged between the microporous insulating material (32) and the heating chamber (12) and on the outer periphery of the heating chamber (12).

13. An aerosol-generating device comprising the heater assembly (10) according to any of the preceding claims.

14. An aerosol-generating system comprising the aerosol-generating device according to claim 13 and an aerosol-forming substrate configured to be at least partly received in the heating chamber (12).

## Patentansprüche

1. Heizvorrichtungsbaugruppe (10) für eine Aerosolerzeugungsvorrichtung, umfassend
eine Heizkammer (12) zum Erwärmen eines aerosolbildenden Substrats;
ein Heizvorrichtungsgehäuse (16), das um die Heizkammer (12) herum angeordnet ist, wobei das Heizvorrichtungsgehäuse (16) radial von der Heizkammer (12) beabstandet angeordnet ist, wobei das Heizvorrichtungsgehäuse (16) einen luftdichten Raum (22) umfasst, und wobei der luftdichte Raum (22) ein mikroporöses Isoliermaterial (32) umfasst, wobei das mikroporöse Isoliermaterial (32) Aerogel umfasst, **dadurch gekennzeichnet, dass** der luftdichte Raum (22) eine Polyimidschicht (52) umfasst.

2. Heizvorrichtungsbaugruppe (10) nach Anspruch 1, wobei das Aerogel ein Silikat-Aerogel ist.

3. Heizvorrichtungsbaugruppe (10) nach einem beliebigen der vorhergehenden Ansprüche, wobei das mikroporöse Isoliermaterial (32) ein Polymerharz umfasst.

4. Heizvorrichtungsbaugruppe (10) nach Anspruch 3, wobei das mikroporöse Isoliermaterial (32) zwischen 0,5 Gew.-% und 50 Gew.-%, bevorzugt zwischen 0,7 Gew.-% und 40 Gew.-%, stärker bevorzugt zwischen 1 Gew.-% und 30 Gew.-%, des Polymerharzes umfasst.

5. Heizvorrichtungsbaugruppe (10) nach Anspruch 3 oder 4, wobei das mikroporöse Isoliermaterial (32) zwischen 1 Gew.-% und 50 Gew.-%, bevorzugt zwischen 5 Gew.-% und 45 Gew.-%, stärker bevorzugt zwischen 10 Gew.-% und 40 Gew.-%, stärker bevorzugt zwischen 20 Gew.-% und 40 Gew.-%, am meisten bevorzugt ungefähr 30 Gew.-%, des Polymerharzes umfasst.

6. Heizvorrichtungsbaugruppe (10) nach einem beliebigen der vorhergehenden Ansprüche, wobei das mikroporöse Isoliermaterial (32) zwischen 1 Gew.-% und 99 Gew.-%, bevorzugt zwischen 50 Gew.-% und 90 Gew.-%, stärker bevorzugt zwischen 60 Gew.-% und 80 Gew.-%, am meisten bevorzugt ungefähr 70 Gew.-%, des Aerogels umfasst.

7. Heizvorrichtungsbaugruppe (10) nach einem beliebigen der vorhergehenden Ansprüche, wobei das mikroporöse Isoliermaterial (32) flexibel ist.

8. Heizvorrichtungsbaugruppe (10) nach einem beliebigen der vorhergehenden Ansprüche, wobei die Polyimidschicht (52) um das mikroporöse Isoliermaterial (32) herum angeordnet ist, wobei die Polyimidschicht (52) bevorzugt in direktem Kontakt mit dem mikroporösen Isoliermaterial (32) angeordnet ist.

9. Heizvorrichtungsbaugruppe (10) nach einem beliebigen der vorhergehenden Ansprüche, wobei ein Spalt (54) zwischen der Polyimidschicht (52) und dem Heizvorrichtungsgehäuse (16) vorgesehen ist.

10. Heizvorrichtungsbaugruppe (10) nach einem beliebigen der vorhergehenden Ansprüche, wobei das mikroporöse Isoliermaterial (32) in direktem Kontakt mit der Heizkammer (12) angeordnet ist.

11. Heizvorrichtungsbaugruppe (10) nach einem beliebigen der vorhergehenden Ansprüche, wobei die Heizvorrichtungsbaugruppe ferner ein Wärmeableitungselement umfasst, das die Heizkammer (12) zumindest teilweise umgibt, wobei das Wärmeableitungselement bevorzugt als eine Graphenschicht vorgesehen ist, wobei die Graphenschicht stärker bevorzugt als eine Beschichtung vorgesehen ist.

12. Heizvorrichtungsbaugruppe (10) nach Anspruch 11, wobei das Wärmeableitungselement zwischen dem mikroporösen Isoliermaterial (32) und der Heizkammer (12) und am Außenumfang der Heizkammer (12) angeordnet ist.

13. Aerosolerzeugungsvorrichtung, die die Heizvorrichtungsbaugruppe (10) nach einem beliebigen der vorhergehenden Ansprüche umfasst.

14. Aerosolerzeugungssystem, das die Aerosolerzeugungsvorrichtung nach Anspruch 13 und ein aerosolbildendes Substrat, das dafür ausgelegt ist, zumindest teilweise in der Heizkammer (12) aufgenommen zu werden, umfasst.

## Revendications

1. Ensemble de chauffage (10) pour un dispositif de génération d'aérosol, comprenant
une chambre de chauffage (12) destinée à chauffer un substrat formant aérosol ;
un boîtier de dispositif de chauffage (16) agencé autour de la chambre de chauffage (12), dans lequel le boîtier de dispositif de chauffage (16) est agencé radialement à distance de la chambre de chauffage (12), dans lequel le boîtier de dispositif de chauffage (16) comprend un espace étanche à l'air (22), et dans lequel l'espace étanche à l'air (22) comprend un matériau isolant microporeux (32), dans lequel le matériau isolant microporeux (32) comprend un aérogel, **caractérisé en ce que** l'espace étanche à l'air (22) comprend une couche de polyimide (52).

2. Ensemble de chauffage (10) selon la revendication 1, dans lequel l'aérogel est un aérogel de silicate.

3. Ensemble de chauffage (10) selon l'une quelconque des revendications précédentes, dans lequel le matériau isolant microporeux (32) comprend une résine polymère.

4. Ensemble de chauffage (10) selon la revendication 3, dans lequel le matériau isolant microporeux (32) comprend entre 0,5 % en poids et 50 % en poids, de préférence entre 0,7 % en poids et 40 % en poids, de manière davantage préférée entre 1 % en poids et 30 % en poids, de la résine polymère.

5. Ensemble de chauffage (10) selon la revendication 3 ou 4, dans lequel le matériau isolant microporeux (32) comprend entre 1 % en poids et 50 % en poids, de préférence entre 5 % en poids et 45 % en poids, de manière davantage préférée entre 10 % en poids et 40 % en poids, de manière davantage préférée entre 20 % en poids et 40 % en poids, de manière préférée entre toutes environ 30 % en poids, de la résine polymère.

6. Ensemble de chauffage (10) selon l'une quelconque des revendications précédentes, dans lequel le matériau isolant microporeux (32) comprend entre 1 % en poids et 99 % en poids, de préférence entre 50 % en poids et 90 % en poids, de manière davantage préférée entre 60 % en poids et 80 % en poids, de manière préférée entre toutes environ 70 % en poids, de l'aérogel.

7. Ensemble de chauffage (10) selon l'une quelconque des revendications précédentes, dans lequel le matériau isolant microporeux (32) est flexible.

8. Ensemble de chauffage (10) selon l'une quelconque des revendications précédentes, dans lequel la couche de polyimide (52) est agencée autour du matériau isolant microporeux (32), de préférence dans lequel la couche de polyimide (52) est agencée en contact direct avec le matériau isolant microporeux (32).

9. Ensemble de chauffage (10) selon l'une quelconque des revendications précédentes, dans lequel un espace (54) est prévu entre la couche de polyimide (52) et le boîtier de dispositif de chauffage (16).

10. Ensemble de chauffage (10) selon l'une quelconque des revendications précédentes, dans lequel le matériau isolant microporeux (32) est agencé en contact direct avec la chambre de chauffage (12).

11. Ensemble de chauffage (10) selon l'une quelconque des revendications précédentes, dans lequel l'ensemble de chauffage comprend en outre un élément de dissipation de chaleur agencé de manière à entourer au moins partiellement la chambre de chauffage (12), de préférence dans lequel l'élément de dissipation de chaleur est prévu sous la forme d'une couche de graphène, de manière davantage préférée dans lequel la couche de graphène est prévue sous la forme d'un revêtement.

12. Ensemble de chauffage (10) selon la revendication 11, dans lequel l'élément de dissipation de chaleur est agencé entre le matériau isolant microporeux (32) et la chambre de chauffage (12) et sur la périphérie extérieure de la chambre de chauffage (12).

13. Dispositif de génération d'aérosol comprenant l'ensemble de chauffage (10) selon l'une quelconque des revendications précédentes.

14. Système de génération d'aérosol comprenant le dispositif de génération d'aérosol selon la revendication 13 et un substrat formant aérosol configuré pour être reçu au moins partiellement dans la chambre de chauffage (12).
